# EUROPÄISCHE PATENTANMELDUNG

(11) **EP 0 527 357 A1**
(43) Veröffentlichungstag der Anmeldung: **17.02.1993**
(21) Anmeldenummer: 92112351.9
(22) Anmeldetag: 20.07.1992
(51) Int. Cl.: G21C 19/307

(54) **Verfahren zur Behandlung des Primärkühlmittels eines Druckwasserreaktors**

(30) Priorität: 09.08.1991 DE 4126468
(71) Anmelder: PROMOTECH CORPORATION, FL-9490 Vaduz (LI)
(72) Erfinder: Pasevic,Vladimir Ivanovic, Mytisci, Moskovskoi oblasti (SU); Pasevic,Dmitrii Vladimirovic, Myiisci, Moskovskoi oblasti (SU)
(74) Vertreter: von Füner, Alexander, Dr.

(57) **Zusammenfassung**

Gegenstand der Erfindung ist ein Verfahren zur Behandlung des Primärkühlmittels eines Druckwaserreaktors unter Regelung seiner Leistung durch den H₃BO₃-Gehalt im Kühlmittel, wobei man dem Kühlkreislauf eines bis zur Energieerzeugung hochgefahrenen Kernreaktors kontinuierlich Hydrazinhydrat (N₂H₄.H₂O) in solchen Mengen zudosiert, daß sein Gehalt in einer dem Reaktor entnommenen Probe 5.10⁻⁶ bis 5.10⁻² g/kg Kühlmittel beträgt und auf an sich bekannte Weise den überschüssigen Wasserstoff aus dem Kühlmittelsystem bis zu einem Gehalt von höchstens 100 n.ml/kg entfernt.

## Beschreibung

Die Erfindung betrifft Druckwasserreaktoren unter Regelung der Reaktorieistung durch den Borsäuregehalt im Kühlmittel und insbesondere ein Verfahren zur Regulierung des Wasserhaushalts von Atomreaktoren zur Stromerzeugung.

Es ist bekannt, daß Borsäure im Kühlmittel eines Kernreaktors, die zur sanften Steuerung der Brennstoffreaktivität verwendet wird, eine erhöhte Werkstoffkorrosion bewirkt. Außerdem entstehen beim Zerfall des Kernbrennstoffs starke Ströme von Neutronen, γ₋Strahlung und α- bzw. β-Teilchen, die ihrerseits auf das Wasser einwirken und es in Sauerstoff, Wasserstoff und eine Vielzahl von Oxidradikale zerlegen, welche die Werkstoffkorrosion noch verstärken (Report of IAEA "Coolant technology of water reactors, Doc. 0846j, 11.03.91, S. 27-29).

Die Korrosionsprodukte geraten in Form unlöslicher Oxide in die Zone der Bestrahlung durch den Neutronenstrom (Brennelemente), werden radioaktiv, setzen sich beim Transport durch den Kühlkreislauf auf der Reaktorinnenfläche ab und bilden eine radioaktive Verunreinigung, die erhebliche technische Schwierigkeiten bei der Bedienung, Reparatur und Inspektion des Reaktors verursacht (Report of IAEA "Coolant technology of water reactors", Doc. 0846j, 11.03.91, S. 54-55).

Zur Verringerung der Korrosivität der Borsäure werden dem Kühlmittel im Falle von Druckwasserreaktoren 1 bis 2 ppm LiOH (Report of IAEA "Coolant technology of water reactors, Doc. 0846j, 11.03.91, S. 27-29) oder unter Berücksichtigung der Anwesenheit von Ionen wie Li⁺ und Na⁺ 0,05 - 0,45 mM/kg KOH zugesetzt.

Zur Verringerung der Radiolyse des Wassers wird bei Druckwasserreaktoren Wasserstoff und bei Wasser-Wasser-Reaktoren Ammoniak zudosiert, aus dem dann Wasserstoff freigesetzt wird (Report of IAEA "Coolant technology of water reactors, Doc. 0846j, 11.03.91, S. 27).

Diese Verfahren ermöglichen den Betrieb von Kernreaktoren, gewährleisten jedoch keine erhebliche Senkung der Kontamination des Reaktors, d.h. die γ-Dosisleistung der einzelnen Teile des Dampfgenerators liegt in einem Bereich zwischen 3 und 30 R/h (s. "Report of IAEA '"Coolant technology of water reactors", Doc. 0846j, 11.03.91, S. 27-28).

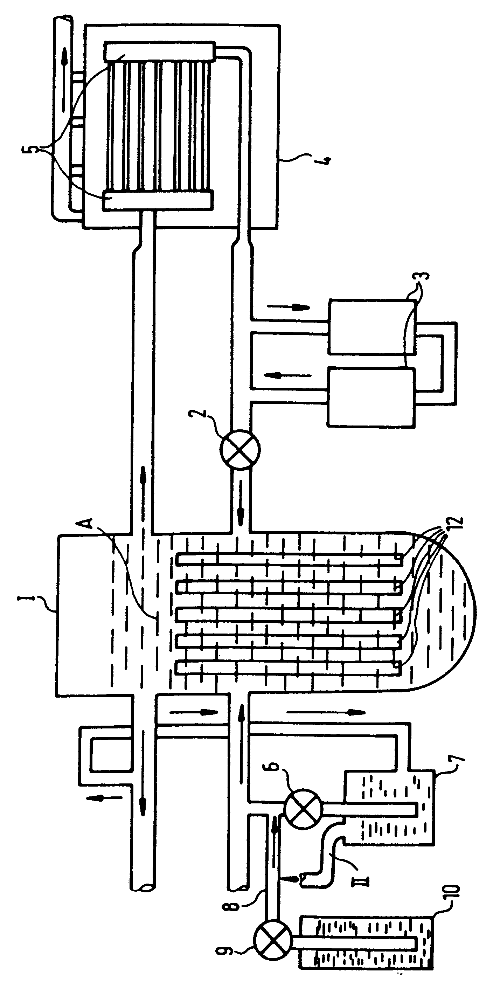

Der Reaktor arbeitet beim bekannten Verfahren gemäß Fig. 1 wie folgt:
Der Primärkreislauf umfaßt einen Reaktor 1, eine Hauptumwälzpumpe 2, Ionenaustauschfilter zur Reinigung des Kühlmittels 3, einen Dampfgenerator 4, eine Dampfleitung 5 des Sekundärkreislaufs, eine Pumpe 6 für die Ableitung des Kühlmittels, einen Zuspeisungsentlüfter 7, Kreislaufrohrleitungen 8 von großem Durchmesser, eine Einspeisepumpe 9, einen Druckhalter 10, eine Druckminderungsvorrichtung 11 für den Entlüfter, Brennelemente 12 und ein Kühlmittel A.

Dem Primärkreislauf des mit frischem Brennstoff beschickten Reaktors 1 werden 12 bis 15 g/l Borsäurelösung zudosiert. Die Ionenaustauschfilter 3 zur Reinigung des Kühlmittels A werden mit H₃BO₃ und KOH im Gemisch mit NH₃ bis zur Gleichgewichtskonzentration gesättigt. Vor dem Anfahren des Reaktors 1 bei einer Temperatur von höchstens 80°C wird dem Kühlmittel A zur chemischen Abbindung des Sauerstoffs eine Hydrazinhydratlösung in einer Konzentration zudosiert, die über dem dreifachen Überschuß des gemessenen O₂-Gehalts liegt.

Nach Durchführung der genannten Arbeitsgänge wird der Reaktor dann bis zur Erzielung einer gesteuerten Mindestleistung (W = 10⁻⁶ %) physikalisch hochgefahren.

Nach der notwendigen Messung der physikalischen Parameter der Reaktoranlage wird dann die Reaktorleistung weiter gesteigert, wonach dann bis zur Energieerzeugung hochgefahren wird. Zu diesem Zeitpunkt werden dem Kühlmittel KOH in einer der abgemessenen H₃BO₃-Menge entsprechenden Menge, jedoch höchstens 0,45 mMol/kg und 5 bis 10 mg/kg NH₃, jeweils bezogen auf das Kühlmittel, zudosiert. Aus NH₃ werden dann infolge der Radiolyse 30 bis 60 n.ml/kg, bezogen auf das Kühlmittel, H₂ freigesetzt. Bei diesen chemischen Parametern erfolgt dann der kommerzielle Betrieb von Wasser-Wasser-Reaktoren. Da die Radiolyse des Wassers unter der Strahlungseinwirkung mit hoher Geschwindigkeit abläuft und die Wiedervereinigung der Oxidradikale bei ihrer Umsetzung mit H₂ nicht augenblicklich erfolgt, führen die Oxidradikale des Wassers zur Werkstoffkorrosion, wodurch unlösliche Co, Mn, Ni, Cr, Fe u.a. Elemente enthaltende Oxidverbindungen entstehen.

Durch den Kühlmittelumlauf gelangen Korrosionsprodukte in den Wirkungsbereich des Kernbrennstoffs und werden unter der Einwirkung der freiwerdenen thermoelektrischen Kräfte von der Wandung der Brennstoffelemente angezogen, wo sie einem mächtigen Neutronenstrom ausgesetzt sind und sich in die Isotopen ⁵⁸Co, ⁶⁰Co, ⁵⁴Mn, ⁵¹Cr, ⁵⁹Fe usw. umwandeln.

Bei konstanter Reaktorbelastung gehen dann die aktivierten Korrosionsprodukte allmählich in das Kühlmittelwasser über. Bei starken Belastungsschwankungen hingegen werden diese Produkte von der Wandung der Brennelemente stark abgewaschen. In beiden Fällen werden jedoch Metalloxidteilchen über den Kühlkreislauf verdriftet und setzen sich infolge Isotopenaustausch oder einfach durch Sorption an den Reaktorinnenflächen (Sorptionskoeffizient K⁺ 1.10⁻⁴ sek.⁻¹) an den Reaktorvandungen ab und führen somit zu einer Kontamination. Anlagen zur Reinigung des Kühlmittels verringern dann durch Entfernen eines bestimmten Teils des Kühlmittels den Gehalt an aktivierten Produkten im Kühlmittel mit einem Koeffizienten K⁺ 1.10⁻⁵ sek.⁻¹. Eine vollständige Reinigung des Kühlmittels wird jedoch dadurch nicht erreicht. Schließlich kommt es zu einer allmählichen Anreicherung an radioaktiven Isotopen auf der Reaktorinnenfläche und zu ihrer Kontamination. Die bekannten Techniken zur Verringerung der Kontamination ermöglichen zwar den Betrieb von Kernreaktoren, gewährleisten jedoch keine erhebliche Senkung der Kontamination des Reaktors, d.h. die γ-Dosisleistung der einzelnen Teile des Dampfgenerators liegt in einem Bereich zwischen 3 und 30 R/h. Die geringste γ-Strahlendosis wird bei Zudosierung von KOH und NH₃ bei Wasser-Wasser-Reaktoren zum Primärkreislauf erzielt. Aber auch in diesem Fall ist die γ-Strahlendosis noch sehr hoch (durchschnittlich 3 bis 7 R/h), wie dies z.B. beim Kraftwerk in Lovisa (Finnland) der Fall ist. Die γ-Dosisleistungsbereiche betragen bei Druckwasserreaktoren vom Typ "Westinghouse" und "Siemens" (KWU) jeweils 3 bis 40 R/h bzw. 3 bis 45 R/h (s. Report of IAEA "Coolant technology of water reactors", Doc. 0846j, 11.03.91, S. 54-55).

Derzeit in Betrieb befindliche Kernkraftwerke zeigen hinsichtlich der wasserchemischen Fahrweise somit folgende Nachteile:
- Unzureichende Geschwindigkeit der Wiedervereinigung der Oxidradikale unter H₂-Einwirkung, wodurch es zur Korrosion der Reaktorverkstoffe kommt;
- starke Akkumulierung von Korrosionsprodukten an der Brennelementwandung, was zu ihrer Aktivierung und nachfolgenden Verdriftung über den Kühlkreislauf führt;
- der Sorptionskoeffizient der aktivierten Korrosionsprodukte übersteigt hinsichtlich der Absetzgeschwindigkeit den Reinigungskoeffizienten, weshalb trotz Leistungssteigerung der Reinigungsanlage eine Kontamination des Reaktors nicht verhindert werden kann.

Der Erfindung liegt die Aufgabe zugrunde, die Geschwindigkeit der Werkstoffkorrosion zu vermindern sowie die Aktivierung der Korrosionsprodukte und ihr Absetzen an den Reaktorwandungen zu verringern und auf diese Weise die Reaktorkontamination unter entsprechender Einschränkung der γ-Dosisleistung auf < 3 R/h herabzusetzen.

Diese Aufgabe wird wie aus den nachstehenden Ansprüchen ersichtlich dadurch gelöst, daß dem im Reaktor umlaufenden Kühlmittel kontinuierlich Hydrazinhydrat zudosiert wird, und zwar in einer solchen Menge, daß sein Gehalt in einer dem Reaktor entnommenen Probe 5.10⁻⁶ bis 5.10⁻² g/kg Kühlmittel beträgt, wobei man auf an sich bekannte Weise aus dem Reaktorkreislauf kontinuierlich überschüssigen Wasserstoff entfernt, um seine Konzentration in einem Bereich von30 bis 60 n.ml/l zu halten.

Bis heute wurde niemals mit einer kontinuierlichen Zudosierung zum Kühlmedium im in Betrieb befindlichen Reaktor gearbeitet, da Hydrazinhydrat sich innerhalb von 10 bis 20 Sekunden in Stickstoff und Wasserstoff zersetzt und dieser bei stetem Anstieg der Konzentration auf über 60 n.ml/kg Kühlmittel zur Zerstörung der Brennelementhüllen aus Zr-Legierungen führt. Überraschenderweise wurde nun festgestellt, daß unter der Einwirkung starker Neutronenströme und von γ-Strahlen des in Betrieb befindlichen Reaktors in einem System aus Hydrazinhydrat, Ammoniak und Wasserstoff neue Reaktionen ausgelöst werden, und zwar kommt es zu einer strahleninduzierten Synthese zwischen dem Hydrazinhydrat aus NH₃ und seinen Zersetzungsprodukten. Die umgekehrte Synthese von Hydrazinhydrat aus NH₃ und H₂ läuft jedoch langsamer ab als die Zersetzung von Hydrazinhydrat. Die Reaktion erfolgt nach folgender Gleichung: 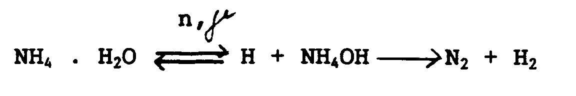
worin n Neutronen und γ γ-Strahlung bedeuten.

Zur Aufrechterhaltung des Reaktionsgleichgewichts sind eine kontinuierliche Zudosierung des Hydrazinhydrats zum Kühlmittel in den angeführten Mengen sowie eine Entfernung des H₂-Überschusses notwendig.

Das Hydrazinhydrat, das ein starkes Reduktionsmittel darstellt, führt zu einer erheblichen Verminderung des elektrochemischen Potentials (Eₕ) im System Metall-Wasser. Bei den bekannten Verfahren erreicht das Potential Werte von höchstens -700 mV in bezug auf die H₂-Elektrode, wobei die Korrosionsgeschwindigkeit von nichtrostendem Stahl ca. 0,5 mg/m² pro Stunde beträgt. Bei einem Wasser-Wasser-Reaktor vom Typ VVER-440 fallen dabei während einer Reaktorbetriebsperiode von ca. 7000 Betriebsstunden etwa 30 bis 50 kg Korrosionsprodukte an. Eine weitere Verminderung des Eₕ-Potentials in den negativen Bereich ist nicht möglich. Nur eine kontinuierliche Zudosierung von Hydrazinhydrat ermöglicht eine noch weitere Absenkung des pH-Werts und damit eine starke Verminderung der Korrosionsgeschwindigkeit. Hydrazinhydrat reagiert überaus heftig mit O₂ und Oxidradikalen unter Bildung von Wasserstoff, Stickstoff und Wasser.

Bei der Radiolyse von Hydrazinhydrat entstehen atomarer Wasserstoff, Ammoniak und Stickstoff. Die Wiedervereinigung der Radikale zu Wasser erfolgt daher erheblich schneller als bei der NH₃-Radiolyse.

Die Untersuchung der Sorptions-Desorptions-Prozesse der Produkte bei der Zudosierung von Hydrazinhydrat hat ergeben, daß es an der Brennelementwandung zu keiner Akkumulierung von Korrosionsprodukten kommt. Der Sorptionskoeffizient K⁺ wird auf ca. 1.10⁻⁵ bis 0,5.10⁻⁵ sek.⁻¹ abgesenkt, was mit dem Reinigungskoeffizienten übereinstimmt. Dies führt zu einer Inaktivierung der kontaminierten Oberflächen und zu einem Freibleiben sauberer Oberflächen von Kontaminierung.

Dies ermöglicht eine Verringerung der Kontamination auf eine γ-Dosisleistung von höchstens ca. 1 R/h, was erheblich unter der Kontamination bei den gegenwärtig in Betrieb befindlichen Kernkraftwerken liegt.

Das Verfahren kann sowohl in bereits in Betrieb befindlichen als auch noch in Betrieb zu nehmenden Kernkraftwerken durchgeführt werden.

Bei in Betrieb befindlichen Kernkraftwerken wird das Verfahren wie folgt durchgeführt:
- Zuerst wird der Wasserstoff aus dem Kühlmittel über die Entlüftersysteme oder auf andere Weise kontinuierlich entfernt. In der Praxis entspricht dies einer Entgasung des Kühlmittels bei einem Volumen von 5 bis 15 t/h;
- ohne Abänderung der übrigen Paramter des Kühlmittels wird dann die Zudosierung von NH₃ eingestellt;
- anstelle von NH₃ wird dem Zusatzwasser kontinuierlich Hydrazinhydrat in Mengen zugesetzt, die einen Gehalt in einer dem Reaktor entnommenen Probe von 5.10⁻⁸ bis 5.10⁻² g/kg Kühlmittel gewährleisten;
- durch die kontinuierliche Zudosierung von Hydrazinhydrat und dessen radiolytische Synthese aus NH₃, das in diesem Fall in der Anfangsphase im Überschuß vorhanden ist, stellt sich folgendes Gleichgewicht im Hydrazinhydratsystem ein: 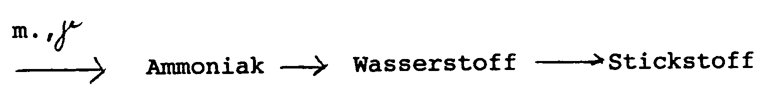 Beim Gleichgewichtszustand des Systems verschiebt sich der Eₕ-Wert des Potentials stark in den negativen Bereich, wodurch man Wirkungen erzielt, welche eine Verringerung der Kontamination des Reaktors begünstigen.

Die Erfindung wird nachfolgend anhand von Beispielen näher erläutert:

### Beispiel 1

Dem Zusatzwasser eines Reaktors wird nach seinem Hochfahren bis zur Energieerzeugung Hydrazinhydrat in einer solchen Menge zudosiert, daß sein Gehalt in einer dem Reaktor entnommenen Probe 2.10⁻⁵ bis 4.10⁻⁵ g/kg Kühlmittel beträgt. Die kontinuierliche Entfernung des bei der Radiolyse von Hydrazinhydrat entstehenden Wasserstoffs erfolgte durch Entgasung des Kühlmittels im System Entlüfter-Zuspeisung bei einem Durchsatz von 6 t/h. Dabei wird die KOH-Menge in einem Bereich von 0,45 bis 0,05 mM/kg Kühlmittel, je nach der H₃BO₃-Konzentration, gehalten. Nach längeren Tests überstieg die an den Achsen des kalten und warmen Sammlers des Dampfgenerators gemessene γ-Dosisleistung nicht 1 R/h, und zwar lag sie in einem Bereich von 0,3 bis 1,0 R/h.

### Beispiel 2

Dem Zusatzwasser eines Reaktors, der über 5 Jahre bereits mit NH₃, Kalium und Bor gearbeitet hatte, wurde nach Einstellung der Zudosierung von NH₃ sowie bei kontinuierlicher Abfuhr des H₂-Überschusses Hydrazinhydrat in Beispiel 1 entsprechenden Mengen zudosiert. Nach Durchführung der Tests war die γ-Dosisleistung, gemessen an den Sammlerachsen des Dampfgenerators, von 7,4 R/h auf 1,25 R/h abgesunken.

Die kontinuierliche Zudosierung von Hydrazinhydrat kann mit H₃BO₃-Reaktoren unter Korrektur des Kühlmittels sowohl mit KOH als auch mit LiOH eingesetzt werden.

## Patentansprüche

1. Verfahren zur Behandlung des Primärkühlmittels eines Druckwasserreaktors unter Regelung seiner Leistung durch den H₃BO₃-Gehalt im Kühlmittel, dadurch **gekennzeichnet,** daß man dem Kühlkreislauf eines bis zur Energieerzeugung hochgefahrenen Kernreaktors kontinuierlich Hydrazinhydrat (N₂H₄.H₂O) in solchen Mengen zudosiert, daß sein Gehalt in einer dem Reaktor entnommenen Probe 5.10⁻⁶ bis 5.10⁻² g/kg Kühlmittel beträgt und auf an sich bekannte Weise den überschüssigen Wasserstoff aus dem Kühlmittelsystem bis zu einem Gehalt von höchstens 100 n.ml/kg entfernt.

2. Verfahren nach Anspruch 1, dadurch **gekennzeichnet,** daß man das Hydrazinhydrat in einer Menge zudosiert, so daß sein Gehalt in einer dem Reaktor entnommenen Probe 2.10⁻⁵ bis 1.10⁻⁴ g/kg Kühlmittel beträgt.

3. Verfahren nach einem der vorangegangenen Ansprüche, dadurch **gekennzeichnet,** daß man den Wasserstoffüberschuß durch Entlüftung entfernt.

4. Verfahren nach einem der vorangegangenen Ansprüche, dadurch **gekennzeichnet,** daß man den Wasserstoffüberschuß aus dem Kühlmittelsystem bis zu einem Gehalt von 50 bis 60 n.ml/kg entfernt.
